# EUROPÄISCHE PATENTSCHRIFT

(11) **EP 4 038 352 B1**
(45) Veröffentlichungstag und Bekanntmachung des Hinweises auf die Patenterteilung: **18.12.2024**
(21) Anmeldenummer: 20760452.1
(22) Anmeldetag: 20.08.2020
(51) Int. Cl.: G01F 23/00, G01D 11/30, F16B 37/12, F16B 37/14, F16B 43/00

(54) **HYGIENEGERECHTER ADAPTER FÜR FELDGERÄT**
HYGIENIC ADAPTER FOR FIELD INSTRUMENT
ADAPTATEUR HYGIÉNIQUE POUR INSTRUMENT DE TERRAIN

(30) Priorität: 30.09.2019 DE 102019126381
(43) Veröffentlichungstag der Anmeldung: 10.08.2022
(73) Patentinhaber: Endress+Hauser SE+Co. KG, 79689 Maulburg (DE)
(72) Erfinder: SCHMIDT, Robert, 79650 Schopfheim (DE); FERRARO, Franco, 79650 Schopfheim (DE)
(74) Vertreter: Koslowski, Christine Adelheid
(86) Internationale Anmeldenummer: PCT/EP2020/073417
(87) Internationale Veröffentlichungsnummer: WO 2021/063598

(56) Entgegenhaltungen:
- DE-A1- 102015 122 177
- JP-A- S5 748 616
- US-A- 4 495 810
- US-A- 4 799 174
- US-A1- 2015 082 880
- US-A1- 2016 370 211
- US-A1- 2018 348 022
- US-B1- 7 159 473

## Beschreibung

Die Erfindung betrifft eine Befestigungsanordnung zum Einbringen eines Feldgeräts in einen Behälter, eine Adapteranordnung mit einer erfindungsgemäßen Befestigungsanordnung sowie eine Messanordnung mit einer erfindungsgemäßen Adapteranordnung. Das Feldgerät umfasst ein Gehäuse und einen Sensor, wobei der Sensor des Feldgeräts mindestens teilweise in den Behälter hineinragt, wobei das Feldgerät zur Bestimmung und/oder Überwachung einer physikalischen oder chemischen Prozessgröße eines Mediums in dem Behälter dient.

Feldgeräte dienen der Überwachung und/ oder Bestimmung mindestens einer, beispielsweise chemischen oder physikalischen, Prozessgröße eines Mediums. Im Rahmen der vorliegenden Anmeldung werden im Prinzip alle Messgeräte als Feldgerät bezeichnet werden, die prozessnah eingesetzt werden und die prozessrelevante Informationen liefern oder verarbeiten. Eine Vielzahl solcher Feldgeräte wird von Firmen der Endress + Hauser-Gruppe hergestellt und vertrieben.

Bei der von dem Feldgerät zu bestimmenden Prozessgröße kann es sich um den Füllstand, den Durchfluss, den Druck, die Temperatur, den pH-Wert, ein Redoxpotential, oder die Leitfähigkeit des jeweiligen Mediums handeln. Die der Prozessgröße entsprechenden unterschiedlichen, möglichen Messprinzipien sind aus dem Stand der Technik bekannt und werden hier nicht weiter erläutert. Feldgeräte zur Messung des Füllstands sind insbesondere als Mikrowellen-Füllstandsmessgeräte, Ultraschall-Füllstandsmessgeräte, zeitbereichsreflektometrische Füllstandsmessgeräte (TDR), radiometrische Füllstandsmessgeräte, kapazitive Füllstandsmessgeräte, konduktive Füllstandsmessgeräte und vibronische Füllstandsmessgeräte ausgestaltet. Feldgeräte zur Messung des Durchflusses dagegen arbeiten beispielsweise nach dem Coriolis-, Ultraschall-, Vortex-, thermischen und/ oder magnetisch induktiven Messprinzip. Bei Druckmessgeräten handelt es sich bevorzugt um sogenannte Absolut-, Relativ- oder Differenzdruckgeräte.

Ein Feldgerät umfasst zumindest einen zumindest teilweise und zumindest zeitweise mit dem Prozess in Berührung kommenden Sensor und eine Elektronik, welche beispielsweise der Signalerfassung, -auswertung und/oder -speisung dient. Die Elektronik des Feldgeräts ist typischerweise in einem Gehäuse angeordnet und verfügt zusätzlich über mindestens ein Anschlusselement zum Anschluss der Elektronik an den Sensor und/oder eine externe Einheit. Das Anschlusselement kann eine beliebige Verbindung sein, auch eine drahtlose Verbindung ist einsetzbar. Die Elektronik und der Sensor des Feldgeräts können in Form separater Einheiten mit getrennten Gehäusen oder als eine gemeinsame Einheit mit einem Gehäuse ausgestaltet sein.

Das Medium mit der vom Feldgerät zu überwachenden oder zu bestimmenden Prozessgröße befindet sich typischerweise in einem Behälter. Bei nicht-invasiven Feldgeräten muss der Sensor nicht in direktem Kontakt mit dem Medium stehen und wird daher beispielsweise häufig an einer Außenseite des Behälters befestigt. Bei invasiven Feldgeräten ragt der Sensor des Feldgeräts in den Behälter hinein oder schließt frontbündig mit der Wand des Behälters ab. Der Sensor des Feldgeräts wird dann häufig mittels eines Befestigungsmechanismus in einer Öffnung in/an dem Behälter angebracht, was typischerweise unter Verwendung eines Dichtelements erfolgt. Dabei können Spalten, Fugen und/oder Toträume entstehen. In solchen Spalten, Fugen und/oder Toträumen können sich potentiell Keime sammeln und/oder Ablagerungen bzw. Biofilme bilden. Diese Keime und/oder Ablagerungen wiederum sind für sterile Anwendungen, beispielsweise im Bereich der Pharmazie, Nahrungs- und Lebensmittelindustrie, inakzeptabel.

In diesem Zusammenhang haben verschiedene internationale oder nationale Kontrollbehörden Standards für die Herstellung und Ausgestaltung von für die sterile Verfahrenstechnik zugelassenem Equipment erarbeitet. Im amerikanischen Raum sind dabei die jeweiligen Standards der "American Society of Mechanical Engineers" (ASME), insbesondere der sog. "ASME Bioprocessing Equipment" (BPE) Standard, und die der "3-A Sanitary Standards Incorporation" (3-A) zu nennen. Im europäischen Raum ist besonders die "European Hygienic Design Group" (EHEDG) relevant. Diese Standards genügen hohen hygienischen Ansprüchen und definieren v.a. Richtlinien zur Vermeidung von Kontamination und zur einfachen mechanischen Reinigung oder Sterilisation von Oberflächen, die am Prozess beteiligt sind. Die EHEDG verweist beispielsweise darauf, dass beim Einsatz von Dichtelementen ein spaltfreies Design genutzt werden muss. Nach der EHEDG müssen direkte Metall-Metallverbindungen, welche in Kontakt mit dem Medium stehen, geschweißt werden. Da die Behälter in der Regel aus Metall gefertigt sind, werden (metallische) Adapter zur Befestigung eines Feldgeräts am Behälter häufig in den Behälter eingeschweißt. Für nichtmetallische Behälter sind aber auch andere Befestigungsmöglichkeiten, wie Klemmen oder Schrauben, denkbar.

Aus dem Stand der Technik sind zahlreiche Befestigungen für Feldgeräte in einem Behälter bekannt geworden. Allerdings genügen nicht alle den gängigen Anforderungen der Hygienestandards und/oder weisen Nachteile bei der Montage der Befestigung auf. Eine Befestigungsanordnung für ein Feldgerät ist in Dokument US 2018/348022 A1 offenbart, wobei die Befestigungsanordnung ein Verbindungsadapter, ein erstes Befestigungselement und ein zweites Befestigungselement aufweist.

Eine übliche Methode der Befestigung eines Feldgeräts in einem Behälter stellt ein einteiliger Adapter dar. Der Adapter ist an einer Öffnung der Behälterwand befestigt und mit einem Innengewinde versehen. In Richtung des Prozesses weist der Adapter eine Nut auf, in welche ein Dichtring eingebracht wird. Das Feldgerät weist einen Abschnitt auf, der als Gewinde ausgebildet ist, und kann in den Adapter hineingedreht werden, so dass ein Teil des Sensors des Feldgeräts durch den Adapter hindurch in den Behälter ragt oder frontbündig mit der Behälterwand abschließt. Bei der Montage wird zunächst der Dichtring im Adapter platziert und anschließend das Feldgerät durch den Dichtring in den Adapter hineingeschraubt. Das Problem bei diesem Vorgehen ist, dass das Einbringen des Feldgeräts in den Adapter mit einem hohen Drehmoment verbunden ist, welches eine Belastung für den Dichtring und das Gewinde darstellt. Als zusätzliches Problem ist es gelegentlich erforderlich, den Dichtring auszutauschen. Dies kann durch den Austausch des Feldgeräts erforderlich sein, dies kann durch die Abnutzung des Dichtrings notwendig werden oder dies kann aus hygienischen Gründen regelmäßig erforderlich sein. Für den Austausch des Dichtringes muss beim im Behälter eingebauten Adapter der Dichtring aus der Nut manuell herausgeholt und ein neuer Dichtring passend platziert werden. Da der Adapter üblicherweise in den Behälter eingeschweißt und damit nicht einfach ausbaubar ist, ist die manuelle Montage des Dichtrings eine umständliche Prozedur. Die verwendete Nut weist oft Hohlräume für die Ausdehnung des Dichtrings mit der Temperatur, Feuchtigkeit usw. auf. Für hygienische Anwendungen ist ein solcher Adapter somit in vielen Fällen nicht zulässig.

Eine weitere Methode zur Befestigung eines Feldgeräts stellt ein mehrteiliges Adaptersystem dar. Solche Adaptersysteme bestehen beispielsweise aus einem Einschweißadapter, einem Adapterring, einer Überwurfmutter und einer Formdichtung. Der Einschweißadapter weist eine Nut in Prozessrichtung für die Auflage der Formdichtung und einen Abschnitt mit einem Gewinde auf. In den Einschweißadapter wird der Adapterring eingeführt, welcher in Prozessrichtung ebenfalls eine Auflage für die Formdichtung besitzt. Mittels der Überwurfmutter wird der Adapterring mit dem Einschweißadapter verbunden. Das Feldgerät wird dann zumindest mit einem Abschnitt des Sensors durch das zusammengebaute Adaptersystem in den Behälter geführt. Eine solche mehrteilige Befestigungsanordnung ist jedoch häufig vergleichsweise kostenintensiv und aufwändig bei der Herstellung und Montage.

Die DE 103 08 086 B3 beschreibt ein mehrteiliges Befestigungssystem mit mindestens einem Dichtring, einem Adapterring und mindestens einer Muffe. Das Feldgerät ragt dabei durch die Muffe hindurch mit mindestens einem Teil des Sensors in den Behälter hinein. Die Muffe weist in Richtung des Prozesses eine Änderung des Durchmessers zur Aufnahme eines Dichtrings auf. Der Adapterring ist in die Muffe einführbar und weist in Prozessrichtung eine Fläche zur Aufnahme des Dichtelements auf. Das Dichtelement wird somit von Adapterring und Muffe festgehalten. Das Feldgerät ist in den Adapterring und die Muffe einführbar und wird an der Muffe befestigt. Bei der Montage werden zunächst der Adapterring und der Dichtring auf das Feldgerät aufgebracht, bevor das Feldgerät in die Muffe eingeführt wird. Der Adapterring ist dabei nicht an dem Feldgerät befestigt, sondern sitzt vor Einbringen des Feldgeräts in die Muffe lediglich auf einer Auflagefläche des Feldgeräts und wird durch den Dichtring auf seiner Position am Feldgerät festgehalten. Damit ist diese Befestigungsweise nur einsetzbar für Feldgeräte, welche eine Auflagefläche zum Aufsetzen des Adapterrings aufweisen. Da die Auflagefläche des Feldgeräts typischerweise an den Sensor anschließt und der Adapterring folglich am Sensor sitzt, führt der Adapterring außerdem zu einer Reduzierung der Kontaktfläche zwischen Sensor und Medium.

Es ist bekannt geworden, zur Überprüfung der Dichtigkeit der Anordnung ein Leckageloch oder eine Leckagebohrung in einer Außenfläche des Grundkörpers des Adapters in einem dem Prozess zugewandten Bereich anzubringen. In dem Fall, dass es wider Erwarten zu einer Leckage kommt, d.h. einem Übertritt des Mediums aus dem Behälter in den Adapter hinein, kann das Medium so über das Leckageloch aus dem Adapter austreten. Die Leckagebohrung zeigt somit sofort an, wenn das Dichtelement innerhalb des Adapters einen Defekt oder eine Fehlstellung aufweist. Anordnungen ohne Leckageloch entsprechen nicht den Richtlinien für hygienische Anwendungen, insbesondere nicht den Richtlinien der EHEDG. Dementsprechend sind Leckagelöcher typischerweise in Anordnungen, welche einem hohen Hygienestandard genügen sollen, zu finden, wie beispielsweise auch in der zuvor beschriebenen Anordnung aus der DE 103 08 086 B3.

Ausgehend vom genannten Stand der Technik liegt der vorliegenden Erfindung die Aufgabe zugrunde, eine Anordnung zur Befestigung eines Feldgeräts an einem Behälter bereitzustellen, welche auf besonders einfache Weise den üblichen Hygiene-Anforderungen gerecht wird.

Die Aufgabe wird erfindungsgemäß durch die Befestigungsanordnung gemäß Anspruch 1, der Adapteranordnung gemäß Anspruch 3 und der Messanordnung gemäß Anspruch 11 gelöst.

Hinsichtlich der Befestigungsanordnung zum Einbringen eines Feldgeräts in einen Behälter, wobei das Feldgerät ein Gehäuse und einen Sensor umfasst, wobei der Sensor des Feldgeräts mindestens teilweise in den Behälter hineinragt, und wobei das Feldgerät zur Bestimmung und/oder Überwachung einer physikalischen oder chemischen Prozessgröße eines Mediums in dem Behälter dient, wird die Aufgabe gelöst durch eine Befestigungsanordnung umfassend
- einen Verbindungsadapter und
- ein Dichtelement.

Der Verbindungsadapter umfasst einen zylindrischen Grundkörper, an welchem folgende Komponenten angeordnet sind: ein erstes Befestigungselement zur Befestigung des Verbindungsadapters an dem Feldgerät, wobei der Verbindungsadapter an dem Feldgerät derart befestigbar ist, dass der Verbindungsadapter das Feldgerät zumindest teilweise umgibt, wenn er an dem Feldgerät befestigt ist; ein zweites Befestigungselement zur Befestigung des Verbindungsadapters an einem Behälteradapter, wobei der Verbindungsadapter an dem Behälteradapter derart befestigbar ist, dass der Behälteradapter den Verbindungsadapter mindestens teilweise umgibt, wenn er an dem Verbindungsadapter befestigt ist; und eine erste Auflage des Verbindungsadapters zur Aufnahme eines Dichtelements. Die erfindungsgemäße Ausgestaltung der Befestigungsanordnung ermöglicht eine Aufnahme des Dichtelements auf die erste Auflage des Verbindungsadapters.

Nach Befestigung des Verbindungsadapters an dem Feldgerät wird das Dichtelement auf der ersten Auflage aufgenommen und mindestens teilweise über den Sensor des Feldgeräts geführt. Das Dichtelement wird folglich positioniert, noch bevor das Feldgerät an dem Behälter befestigt wird. Erst nach Befestigung des Verbindungsadapters an dem Feldgerät und nach Aufnahme des Dichtelements wird das Feldgerät an dem Behälteradapter befestigt, welcher am Behälter befestigt ist. Damit ist das Dichtelement auch auf besonders einfache Weise austauschbar.

Während des Einbringens des Feldgeräts in den Behälteradapter wird, bevor die finale Position des Feldgeräts am Behälteradapter erreicht ist, ein geringer Kraftaufwand aufgebracht, da mechanische Reibung zwischen dem Dichtelement und dem Behälteradapter durch die Verwendung der Befestigungsanordnung vermieden werden kann. Erst kurz vor Erreichen der finalen Position des Feldgeräts am Behälteradapter wird ein erhöhter Kraftaufwand nötig, da dann das Dichtelement zwischen der ersten Auflage und einer weiteren Auflage des Behälteradapters gepresst wird. Gegenüber bestehenden Lösungen wird der Kraftaufwand sowie die Reibung am Dichtelement damit insgesamt verringert. Das Dichtelement wird erfindungsgemäß nicht prozessseitig am Behälter angebracht, sondern mittels des Verbindungsadapters direkt am Feldgerät angeordnet. Dadurch kann das Dichtelement präzise positioniert werden. Dies ist wichtig, um das Dichtelement in diejenige Position zu bringen, welche nach Einbringen des Feldgeräts in den Behälter für eine optimale Dichtigkeit der Anordnung sorgt. Diese Position, im folgenden Zielposition genannt, kann unmittelbar visuell überprüft werden.

Zur Befestigung des Feldgeräts am Behälter kann einerseits der erfindungsgemäße Behälteradapter eingesetzt werden, wie er in der nachfolgenden Adapteranordnung beschrieben wird. Andererseits kann auch ein beliebiger, geeigneter zweiter Adapter genutzt werden, welcher beispielsweise bereits an einem Behälter befestigt ist und welcher die Funktion erfüllt, das Feldgerät am Behälter zu befestigen. Die Befestigungsanordnung kann somit als eine Nachrüstung zur Befestigung eines Feldgeräts an einem Behälter eingesetzt werden, wobei die Einbringung des Dichtelements zunächst am Feldgerät mittels des Verbindungsadapter erfolgt. Diese Nachrüstung ist insbesondere vorteilhaft für solche Feldgeräte, bei denen ein Dichtelement nicht auf einfache Weise an einem Gehäuse des Feldgeräts positioniert werden kann, bevor das Feldgerät am Behälter befestigt wird. Dies ist beispielsweise bei Feldgeräten der Fall, welche einen konstanten Durchmesser des Gehäuses in einem Bereich besitzen, welcher durch den Behälteradapter bzw. zweiten Adapter und in den Behälter geführt wird.

Das Dichtelement ist derart ausgestaltet, dass es auf der Auflage des Verbindungsadapters aufnehmbar ist. In einer vorteilhaften Ausgestaltung ist vorgesehen, dass es sich bei dem Dichtelement um einen O-Ring oder eine Formdichtung handelt. Je nach Ausgestaltung der Auflage kann das Dichtelement auf die Auflage aufgelegt oder mit leichtem Druck in die Auflage hineingedrückt werden. Das Dichtelement wird nach Befestigung des Verbindungsadapters am Feldgerät in die erste Auflage aufgenommen. Das Dichtelement kann passend, also formschlüssig, zur Auflage ausgestaltet sein.

Die der vorliegenden Erfindung zugrundeliegende Aufgabe wird ferner gelöst durch eine Adapteranordnung zum Einbringen eines Feldgeräts in einen Behälter, umfassend
- eine erfindungsgemäße Befestigungsanordnung nach zumindest einer der beschriebenen Ausgestaltungen und
- einen Behälteradapter.

Der Behälteradapter umfasst einen zylindrischen Grundkörper, an welchem folgende Komponenten angeordnet sind: ein drittes Befestigungselement zur Befestigung des Behälteradapters an dem Behälter; ein viertes Befestigungselement zur Befestigung des Behälteradapters an dem Verbindungsadapter mittels des zweiten Befestigungselements; und eine zweite Auflage des Behälteradapters zur Aufnahme des Dichtelements.

Durch die Platzierung des Dichtelements zwischen der ersten Auflage des Verbindungsadapters und der zweiten Auflage des Behälteradapters kann das Dichtelement mittels der beiden Auflagen in die Zielposition geführt werden, welche die Dichtigkeit der Adapteranordnung sicherstellt. Die beiden Auflagen dienen der Führung und Positionierung des Dichtelements in die gewünschte Zielposition, die eine besonders hohe Dichtigkeit der Adapteranordnung gewährleistet. Die Adapteranordnung sorgt dafür, dass mittels des Dichtelements in Prozessrichtung weder Spalte, Fugen noch Toträume vorhanden sind. So wird durch die Adapteranordnung eine dichte und hygienegerechte Anordnung des Feldgeräts relativ zu dem Behälter gewährleistet. Mit der Adapteranordnung kann vorteilhaft den Richtlinien für hygienische Anwendungen entsprochen werden. Da der Verbindungsadapter lösbar am Behälteradapter befestigt ist, kann der Verbindungsadapter einschließlich des Feldgeräts und des Dichtelements vom Behälteradapter getrennt werden und anschließend das Dichtelement, welches am Verbindungsadapter sitzt, ausgetauscht werden. Zudem wird hier ein mehrteiliges Adapterdesign verwendet, welches auf einfache Weise hergestellt und installiert werden kann, da es lediglich auf zwei Adaptern und einem Dichtelement beruht.

In einer Ausgestaltung ist/sind die erste und/oder die zweite Auflage in Form einer Änderung im Außendurchmesser des Verbindungsadapters bzw. des Behälteradapters, insbesondere eines Absatzes, oder einer Auflagefläche ausgestaltet. Weitere mögliche Ausgestaltungen sind eine Kante, eine Schulter, oder eine Furche.

Eine bevorzugte Ausgestaltung beinhaltet, dass die erste und zweite Auflage zueinander komplementär ausgestaltet sind. Die beiden Auflagen wirken also derart zusammen, dass das Dichtelement zwischen den beiden Auflagen aufnehmbar ist, wenn der Verbindungsadapter an dem Behälteradapter befestigt ist. Durch die erste und zweite Auflage wird das Dichtelement sowohl vom Verbindungsadapter als auch vom Behälteradapter in seiner Position festgehalten. Ein Verschieben des Dichtelements in oder gegen die Prozessrichtung wird damit verhindert.

In einer weiteren Ausgestaltung üben die erste und zweite Auflage eine Kraft auf das Dichtelement aus, wenn der Verbindungsadapter an dem Behälteradapter befestigt ist. Dabei wird das Dichtelement in Folge der durch die Auflagen vermittelten Kraft radial und/oder axial verformt. Die Auflagen und/oder das Dichtelement sind insbesondere derart ausgestaltet, dass das verformte Dichtelement die beiden Auflagen, insbesondere passgenau, ausfüllt, wodurch insbesondere Spalte, Fugen und/oder Toträume vermieden werden.

In noch einer Ausgestaltung ist jeweils im Bereich einer Mantelfläche des Grundkörpers des Verbindungsadapters und des Grundkörpers des Behälteradapters jeweils mindestens ein Loch angeordnet. Das Loch des Verbindungsadapters bzw. des Behälteradapters ist entlang einer Längsachse des Grundkörpers des Verbindungsadapters und des Grundkörpers des Behälteradapters jeweils derart angeordnet, dass die erste bzw. zweite Auflage zwischen dem Loch des Verbindungsadapters bzw. dem Loch des Behälteradapters und einem dem Behälter zugewandten Endabschnitt des Verbindungsadapters bzw. des Behälteradapters angeordnet ist/sind. Insbesondere sind die jeweiligen Löcher des Verbindungsadapter bzw. des Behälteradapters jeweils in einem Bereich des Verbindungsadapters bzw. Behälteradapters angeordnet, in welchem keine Befestigungselemente und keine Auflage angeordnet ist. Das Loch, oder auch Leckageloch, hat typischerweise einen Durchmesser von einigen Millimetern. Das Loch des Verbindungsadapters bzw. des Behälteradapters dient zur Überprüfung der Dichtigkeit des Dichtelements der Adapteranordnung, wie bereits in der Einleitung beschrieben.

Eine vorteilhafte Ausgestaltung beinhaltet, dass die jeweiligen Löcher des Verbindungsadapters bzw. des Behälteradapters so angeordnet sind, dass das Loch des Verbindungsadapters und das Loch des Behälteradapters zumindest teilweise überlappen, insbesondere miteinander fluchten, wenn der Verbindungsadapter an dem Behälteradapter befestigt ist. Die Überlappung des Lochs des Verbindungsadapter mit dem Loch des Behälteradapters ermöglicht es, auf einfache Weise aus dem Behälter austretendes Medium zu erkennen, wenn das Dichtelement das Feldgerät nicht effektiv von dem Inhalt des Behälters abdichtet. Diese Ausgestaltung der beiden Löcher des Verbindungs- und des Behälteradapters betreffen insbesondere den Fall des Übertritts des Mediums entlang des inneren Rands des Dichtelements. In einem derartigen Fall der Leckage tritt das Medium entlang des Sensors des Feldgeräts durch das Loch der Verbindungsadapters und durch das Loch des Behälteradapters aus der Adapteranordnung aus. Vorteilhafterweise ist ein Loch mit einem größeren Durchmesser als der Durchmesser des jeweils anderen Lochs ausgestaltet, um die Überlappung der beiden Löcher unter Berücksichtigung der Toleranzen des zweiten und vierten Befestigungselements zu gewährleisten. Die Löcher sind insbesondere derart ausgerichtet, dass das Medium, welches vom Behälter in die Adapteranordnung eintritt, aufgrund der Schwerkraft möglichst unmittelbar aus den Löchern austreten kann. Weiterhin ist es günstig, wenn die Mantelfläche des Verbindungsadapters zumindest im Bereich des Lochs der Verbindungsadapters und die Innenfläche des Grundkörpers des Behälteradapters im Bereich des Lochs des Behälteradapters nicht aufeinander aufliegen bzw. keinen Kontakt haben. Stattdessen ist ein, insbesondere radial umlaufender, Zwischenraum, insbesondere in der Größenordnung von Millimetern, zwischen den beiden Bereichen angeordnet. Bei einer Leckage kann das Medium so auf einfache Weise aus der Adapteranordnung austreten.

Eine weitere Ausgestaltung sieht vor, dass das dritte Befestigungselement eine Vorrichtung zum Schweißen, Schrauben oder Klemmen umfasst. Folglich kann der Behälteradapter mittels der üblichen Flansch-, Schweiß- oder Klemmverbindungen an dem Behälter befestigt sein.

Vorteilhafterweise weist der Behälteradapter in einem Endbereich des Behälteradapters, welcher dem Behälter abgewandt ist, eine größere Wandstärke als der Grundkörper des Behälteradapters in einem mittleren Bereich auf, wenn das dritte Befestigungselement des Behälteradapters eine Vorrichtung zum Schweißen umfasst. Die größere Wandstärke, die auch eine Wulst oder eine Materialverstärkung sein kann, dient hier zum Schutz vor Verformung eines Bereichs des Behälteradapters beim Einschweißen des Behälteradapters in den Behälter.

Die der vorliegenden Erfindung zugrundeliegende Aufgabe wird ferner gelöst durch eine Messanordnung zum Einbringen eines Feldgeräts in einen Behälter, umfassend
- eine erfindungsgemäße Befestigungsanordnung nach zumindest einer der beschriebenen Ausgestaltungen,
- ein erfindungsgemäße Behälteradapter nach zumindest einer der beschriebenen Ausgestaltungen und
- ein Feldgerät.

Das Feldgerät umfasst dabei eine Elektronik und einen Sensor. Typischerweise sind der Sensor und die Elektronik des Feldgeräts zumindest teilweise von zumindest einem Gehäuse umgeben. Das Gehäuse des Feldgeräts weist zudem ein fünftes Befestigungselement zur Befestigung des Feldgeräts an dem Verbindungsadapter mittels des ersten Befestigungselements auf.

In der erfindungsgemäßen Messanordnung wird zunächst der Verbindungsadapter an dem Feldgerät befestigt und das Dichtelement auf die erste Auflage aufgebracht, wobei das Dichtelement über den Sensor des Feldgeräts geschoben wird. Anschließend wird der Verbindungsadapter einschließlich des Feldgeräts und des Dichtelements an dem Behälteradapter befestigt. Während des Einbringens des Feldgeräts in den Behälteradapter erfährt das Dichtelement eine geringe Kraftaufwendung, bis kurz vor Erreichen der finalen Position des Feldgeräts im Behälteradapter. Erst wenn das Dichtelement, welches in der ersten Auflage aufgenommen ist, auf die zweite Auflage aufgenommen wird, was kurz vor Erreichen der finalen Position des Feldgeräts im Behälteradapter erfolgt, wird eine erhöhte Kraftaufwendung nötig, um das Dichtelement zwischen der ersten und zweiten Auflage zu verformen. Das Dichtelement wird dabei zwischen den zwei Auflagen eingepasst, so dass eine hohe Dichtigkeit der Messanordnung erreicht wird. Das Feldgerät kann dabei so ausgestaltet sein, dass sich der Durchmesser des Feldgeräts von dem Bereich der ersten Auflage hin zu einem dem Medium zugewandten Endbereich des Sensors etwas verkleinert, so dass das Dichtelement besonders einfach am Feldgerät aufgebracht werden kann. Da das Dichtelement zunächst am Feldgerät mittels des Verbindungsadapters aufgebracht wird, ist eine visuelle Kontrolle der Zielposition des Dichtelements möglich. Beim Befestigen des Verbindungsadapter an dem Behälteradapter wird das Dichtelement durch die beiden Auflagen, insbesondere automatisch, in die gewünschte Zielposition geführt und kann insbesondere nicht in oder gegen Prozessrichtung verrutschen. Durch die hohe Dichtigkeit der Anordnung sowie der Abwesenheit von Toträumen, Spalte etc erfüllt die Messanordnung die gängigen Richtlinien der Hygienestandards. Die mehrteilige Messanordnung ermöglicht eine einfache Installation des Feldgeräts am Behälter.

Eine vorteilhafte Ausgestaltung sieht vor, dass mindestens ein erster Bereich des Feldgeräts, welcher zumindest teilweise in den Verbindungsadapter hineinragt, wenn das Feldgerät an dem Verbindungsadapter befestigt ist, und mindestens ein zweiter Bereich des Feldgeräts, der zumindest teilweise in den Behälteradapter und in den Behälter hineinragt, wenn das Feldgerät an dem Behälteradapter mittels des Verbindungsadapters befestigt ist, denselben Außendurchmesser aufweisen. Derartig ausgestaltet Feldgeräte profitieren besonders von der erfindungsgemäßen Messanordnung oder Adapteranordnung. Dabei ist es von Vorteil, wenn insbesondere das fünfte Befestigungselement, wenn es in dem ersten oder zweiten Bereich des Feldgeräts angeordnet ist, keine Änderung des Außendurchmessers des ersten und zweiten Bereichs des Feldgeräts bewirkt.

Nach einer weiteren Ausgestaltung umfasst mindestens eins der Befestigungselemente ein Gewinde. Vorteilhafterweise sind das erste und fünfte bzw. das zweite und vierte Gewinde zueinander komplementär ausgestaltet. Insbesondere wirken jeweils ein Innengewinde und ein komplementär ausgestaltetes Außengewinde zusammen. Das erste, zweite, vierte und fünfte Befestigungselement sind insbesondere als lösbare Befestigungselemente ausgestaltet. Das dritte Befestigungselement wird für hygienische Anwendungen in der Regel eine Vorrichtung zum Schweißen umfassen, wobei für Nichtmetall-Metall-Verbindungen zwischen Behälteradapter und Behälter auch andere Befestigungen möglich sind.

In einer weiteren Ausgestaltung handelt es sich bei dem Feldgerät um ein nach dem kapazitiven und/oder konduktiven Messprinzip arbeitendes Feldgerät. Die jeweils zu bestimmenden und/oder zu überwachenden Prozessgrößen sind in diesem Fall der Füllstand, die Leitfähigkeit oder die Dielektrizitätskonstante. Die vorliegende Erfindung ist jedoch keineswegs auf derartige Feldgeräte beschränkt, sondern vielmehr für zahlreiche unterschiedliche, auf unterschiedlichen Messprinzipien beruhende Feldgeräte, wie beispielsweise die in der Beschreibungseinleitung genannten, verwendbar.

Die Erfindung wird anhand der nachfolgenden Zeichnungen Fig. 1 - Fig. 5 näher erläutert. Es zeigt:
Fig. 1 eine schematische Darstellung eines kapazitiven und/oder konduktiven Feldgeräts gemäß Stand der Technik,
Fig. 2 eine Ausgestaltung der erfindungsgemäßen Befestigungsanordnung,
Fig. 3 eine Ausgestaltung der erfindungsgemäßen Befestigungsanordnung, welche mit dem Feldgerät verbunden ist,
Fig. 4 eine Ausgestaltung des erfindungsgemäßen Behälteradapters, und
Fig. 5 eine Ausgestaltung der erfindungsgemäßen Messanordnung.

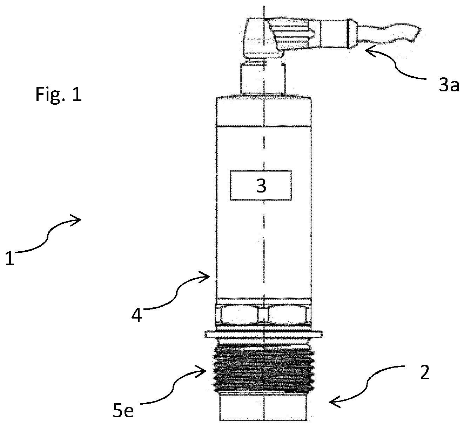

Die vorliegende Erfindung ist auf eine Vielzahl unterschiedlicher Feldgeräte 1 anwendbar. Ohne Beschränkung der Allgemeinheit bezieht sich die nachfolgende Beschreibung jedoch der Einfachheit halber auf ein kapazitives und/oder konduktives Feldgerät 1, wie in Fig. 1 schematisch dargestellt. Die vom Feldgerät 1 zu messenden Prozessgrößen sind insbesondere der Füllstand, die Leitfähigkeit oder die Dielektrizitätskonstante. Die Überlegungen lassen sich analog auf andere Feldgeräte anwenden. Für die erfindungsgemäße Lösung ist in erster Linie die Geometrie des Feldgeräts von Bedeutung, da die Erfindung eine Anordnung eines Geräts in einem Behälter betrifft.

Die einem kapazitiven und/oder konduktiven Feldgerät, insbesondere einem Füllstandsmessgerät, zugrundeliegenden Messfahren sind an sich aus dem Stand der Technik bekannt. Entsprechende Feldgeräte werden von der Anmelderin beispielsweise unter dem Begriff "Nivector", "Liquicap" und "Liquipoint" hergestellt und vertrieben. Eine schematische Darstellung eines entsprechenden Feldgeräts ist in Fig. 1 gezeigt. Der Sensor 2 und die Elektronik 3 des Feldgeräts 1 sind in einer Kompaktbauweise als eine gemeinsame Einheit ausgestaltet. Zur Messung des Füllstands ragt der Sensor 2 des Feldgeräts 1 mindestens teilweise in den Behälter. Der Sensor 2 umfasst eine koaxial aufgebaute Elektrodengruppe (nicht gezeigt), welche mit der Elektronik 3 verbunden ist. Die Elektronik 3 überwacht oder bestimmt den Füllstand des Mediums im Behälter anhand des Signals der Elektrodengruppe des Sensors 2 des Feldgeräts. Dabei wird mindestens eine Elektrode der Elektrodengruppe mit einem Anregesignal beaufschlagt und die Prozessgröße wird anhand des von der Elektrode empfangenen Empfangssignals ermittelt. Für weitere Details sei beispielsweise auf die DE 10 2018 101 206 A1, die DE 10 2014 118 547 A1 oder die DE 10161069A1 verwiesen.

Die Elektronik 3 weist ein Anschlusselement 3a zum Anschluss der Elektronik 3 an eine externe Einheit auf. Weiterhin sind der Sensor 2 und die Elektronik 3 des Feldgeräts 1 von einem Gehäuse 4 umgeben. Das Gehäuse 4 weist zudem ein fünftes Befestigungselement 5e auf, welches der Einfachheit halber ein Außengewinde umfasst. Es können aber auch andere Möglichkeiten der Befestigung für das Befestigungselement 5e verwendet werden.

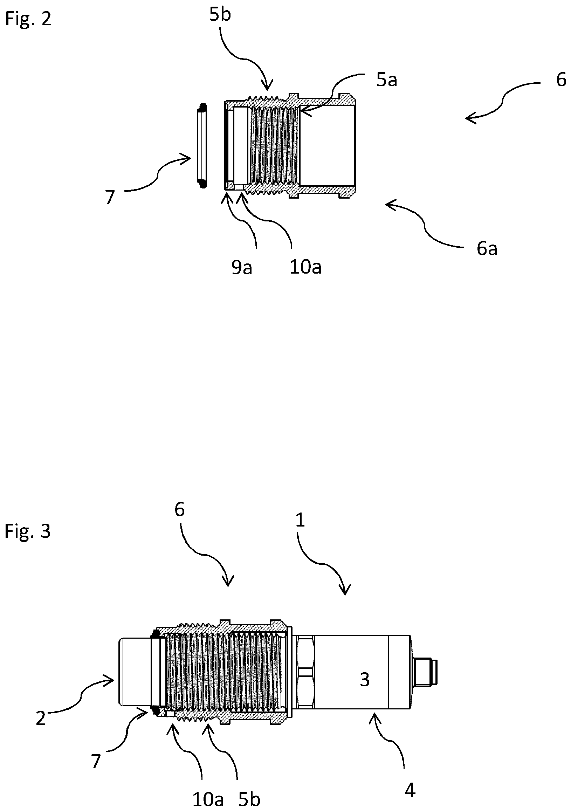

Fig. 2 zeigt eine mögliche Ausgestaltung der Befestigungsanordnung im Längsschnitt, umfassend einen Verbindungsadapter 6 und ein Dichtelement 7. Der Verbindungsadapter 6 weist einen zylindrischen Grundkörper 6a, ein erstes Befestigungselement 5a zur Befestigung des Verbindungsadapters 6 an dem Feldgerät 1, sowie ein zweites Befestigungselement 5b zur Befestigung des Verbindungsadapters 6 an einem Behälteradapter 8 auf. Der Verbindungsadapter 6 ist an dem Feldgerät 1 derart befestigbar, dass der Verbindungsadapter 6 das Feldgerät 1 zumindest teilweise umgibt, wenn er 6 an dem Feldgerät 1 befestigt ist. Zudem ist der Verbindungsadapter 6 an einem hier nicht gezeigten Behälteradapter 8 mittels des zweiten Befestigungselements 5b derart befestigbar, dass der Behälteradapter 8 den Verbindungsadapter 6 mindestens teilweise umgibt, wenn er 8 an dem Verbindungsadapter 6 befestigt ist. Das erste Befestigungselement 5a ist in Fig. 2 der Einfachheit halber als Innengewinde ausgestaltet. Das zweite Befestigungselement 5b ist der Einfachheit halber als Außengewinde ausgestaltet. Für das erste und zweite Befestigungselement sind andere Möglichkeiten der Befestigung nicht ausgeschlossen. Der Verbindungsadapter 6 weist darüber hinaus eine erste Auflage 9a zur Aufnahme des Dichtelements 7 auf. Das Dichtelement 7, welches ein O-Ring oder eine Formdichtung ist, ist dabei auf der Auflage 9a des Verbindungsadapters aufnehmbar.

In Fig. 3 ist eine mögliche Ausgestaltung der erfindungsgemäßen Befestigungsanordnung, welche an dem Feldgerät 1 befestigt ist, dargestellt. Der Verbindungsadapter 6 wird zunächst am Feldgerät 1 mittels des ersten und fünften Gewindes 5a,e, welche zueinander komplementär sind, befestigt, bevor das Dichtelement 7 über den Sensor 2 des Feldgeräts 1 in die erste Auflage 9a des Verbindungsadapters aufgenommen wird. Somit kann das Dichtelement 7 mittels des Verbindungsadapters 6 auf das Feldgerät 1 aufgenommen werden und die Zielposition des Dichtelements 7 visuell überprüft werden.

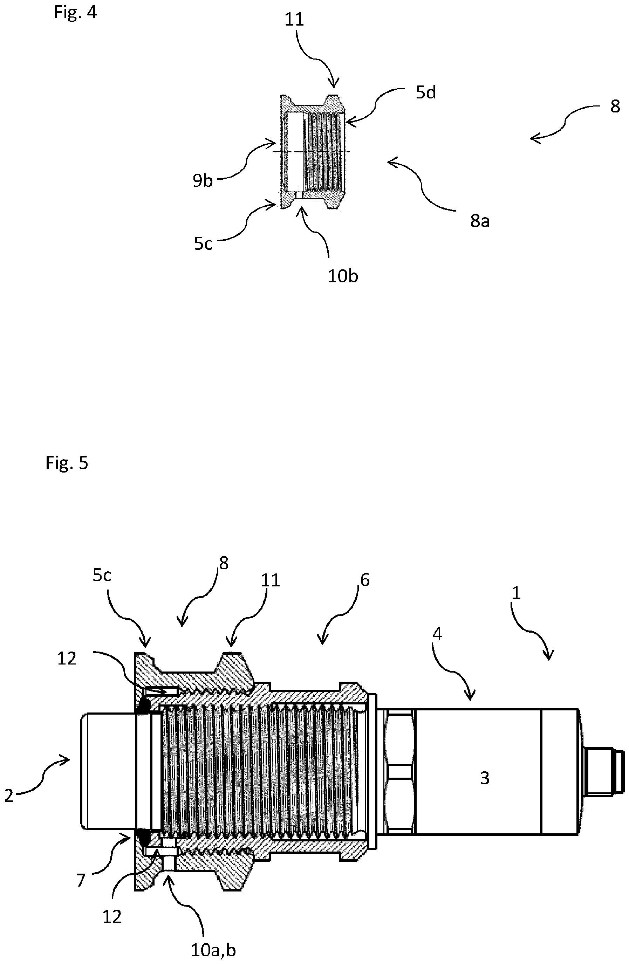

Eine mögliche Ausgestaltung des Behälteradapters 8 ist in Fig. 4 gezeigt. Der zylindrische Grundkörper 8a des Behälteradapters 8 umfasst ein drittes Befestigungselement 5c zur Befestigung des Behälteradapters 8 an dem Behälter (nicht gezeigt), ein viertes Befestigungselement 5d zur Befestigung des Behälteradapters 8 an dem Verbindungsadapter 6 mittels des zweiten Gewindes 5b und eine zweite Auflage 9b des Behälteradapters 8 zur Aufnahme des Dichtelements 7. Das dritte Befestigungselement 5c ist in Fig. 4 als eine Vorrichtung zum Schweißen ausgestaltet. Alternativ könnte auch eine Vorrichtung zum Klemmen oder Schrauben eingesetzt werden. Zusätzlich weist der Behälteradapter 8 in einem dem Behälter abgewandten Endbereich eine größere Wandstärke 11 des Grundkörpers im Vergleich zu einem mittleren Bereich auf. Diese größere Wandstärke 11, oder auch Materialverstärkung oder Wulst, dient hier als Schutz vor Verformung des Behälteradapters 8 beim Einschweißen in den Behälter. Das vierte Befestigungselement 5d umfasst in Fig. 3 ein Innengewinde; andere Möglichkeiten der Befestigung sind damit jedoch auch in diesem Fall nicht ausgeschlossen. Vorteilhafterweise sind die erste und zweite Auflage 9a,b jeweils als Auflagefläche ausgestaltet, wobei weitere Alternativen der Ausgestaltung der Auflagen, wie eine Änderung des Außendurchmesser des Verbindungsadapters, ebenfalls möglich sind. Die Ausgestaltung der hier zueinander komplementären Auflagen wird anschließend in Fig. 5 sichtbar. Im Bereich der Mantelfläche des Behälteradapters 8 ist ein Loch 10b entlang der Längsachse des Behälteradapters 8 angeordnet. Dabei ist die zweite Auflage 9b zwischen dem Loch 10b des Behälteradapters und einem dem Behälter zugewandten Endabschnitt des Behälteradapters 8 angeordnet. In der Adapteranordnung weist der Verbindungsadapter 6 ebenfalls ein Loch 10a in einem entsprechenden Bereich auf. Dies wird anhand der Messanordnung in Fig. 5 näher erläutert werden.

Fig. 5 zeigt eine Ausgestaltung der Messanordnung mit Feldgerät 1, Verbindungsadapter 6, Behälteradapter 8 und Dichtelement 7. Im Vergleich zu Fig. 3 wird hier zusätzlich der Behälteradapter 8 an dem Verbindungsadapter 6 mittels der zueinander komplementären zweiten und vierten Gewinde befestigt. Das Feldgerät 1 weist einen konstanten Außendurchmesser im ersten Bereich, welcher in den Verbindungsadapter 6 hineinragt, und im zweiten Bereich, welcher in den Behälteradapter 8 und den Behälter hineinragt, auf. Das fünfte Gewinde 5e bewirkt keine Änderung der Außendurchmessers des Feldgeräts 1. Die erste und zweite Auflage 9a,b sind zueinander komplementär ausgestaltet, so dass das Dichtelement 7 passgenau zwischen den beiden Auflagen aufnehmbar ist, wenn der Verbindungsadapter 6 an dem Behälteradapter 8 befestigt ist. Die erste und zweite Auflage 9a,b fassen das Dichtelement 7 ein und üben gleichzeitig eine Kraft auf das Dichtelement 7 auf, wodurch dieses radial und/oder axial verformt wird. Die beiden Löcher 10a,b des Verbindungsadapters und des Behälteradapters sind derart angeordnet, dass sie innerhalb der zusammengebauten Messanordnung miteinander fluchten. Alternativ können die beiden Löcher 10a,b auch mindestens überlappen. Ein Zwischenraum 12 verbindet den äußeren Durchmesser des Dichtelements 7 mit den beiden Löchern 10a,b und ist radial zwischen der Mantelfläche des Verbindungsadapters und der Innenfläche des Behälteradapters angeordnet. Der Zwischenraum 12 ist optional und mit anderen Ausgestaltungen beliebig kombinierbar. Die Kombination aus den Löchern 10a,b und dem Zwischenraum 12 ermöglicht einen einfachen Austritt des Mediums in dem Fall einer Leckage.

### Bezugszeichenliste

- 1: Feldgerät
- 2: Sensor
- 3: Elektronik
- 3a: Anschlusselement
- 4: Gehäuse
- 5: Befestigungselement
- 5a: erstes Befestigungselement
- 5b: zweites Befestigungselement
- 5c: drittes Befestigungselement
- 5d: viertes Befestigungselement
- 5e: fünftes Befestigungselement
- 6: Verbindungsadapter
- 6a: zylindrischer Grundkörper des Verbindungsadapters
- 7: Dichtelement
- 8: Behälteradapter
- 8a: zylindrischer Grundkörper des Behälteradapters
- 9: Auflage
- 9a: erste Auflage des Verbindungsadapters
- 9b: zweite Auflage des Behälteradapters
- 10: Loch
- 10a: Loch des Verbindungsadapters
- 10b: Loch des Behälteradapters
- 11: größere Wandstärke des Behälteradapters
- 12: Zwischenraum

## Patentansprüche

1. Befestigungsanordnung zum Einbringen eines Feldgeräts (1) in einen Behälter, wobei das Feldgerät (1) ein Gehäuse (4) und einen Sensor (2) umfasst, wobei der Sensor (2) des Feldgeräts mindestens teilweise in den Behälter hineinragt, und wobei das Feldgerät (1) zur Bestimmung und/oder Überwachung einer physikalischen oder chemischen Prozessgröße eines Mediums in dem Behälter dient, umfassend
- einen Verbindungsadapter (6), umfassend einen zylindrischen Grundkörper (6a), an welchem folgende Komponenten angeordnet sind,
a. ein erstes Befestigungselement (5a) zur Befestigung des Verbindungsadapters (6) an dem Feldgerät (1), wobei der Verbindungsadapter (6) an dem Feldgerät (1) derart befestigbar ist, dass der Verbindungsadapter (6) das Feldgerät (1) zumindest teilweise umgibt, wenn er an dem Feldgerät (1) befestigt ist,
b. ein zweites Befestigungselement (5b) zur Befestigung des Verbindungsadapters (6) an einem Behälteradapter (8), wobei der Verbindungsadapter (6) an dem Behälteradapter (8) derart befestigbar ist, dass der Behälteradapter (8) den Verbindungsadapter (6) mindestens teilweise umgibt, wenn er an dem Verbindungsadapter (6) befestigt ist,
c. eine erste Auflage (9a) des Verbindungsadapters (6) zur Aufnahme eines Dichtelements (7) auf einer endständigen Fläche des Grundkörpers (6), und
- ein Dichtelement (7), wobei das Dichtelement so ausgestaltet ist, dass es auf der Auflage (9a) des Verbindungsadapters (6) aufnehmbar ist und wobei das Dichtelement (7) mediumsberührend angeordnet ist, wenn das Feldgerät (1) in den Behälter eingebracht ist.

2. Befestigungsanordnung nach Anspruch 1,
wobei das Dichtelement (7) ein O-Ring oder eine Formdichtung ist.

3. Adapteranordnung zum Einbringen eines Feldgeräts (1) in einen Behälter, umfassend
- eine Befestigungsanordnung nach zumindest einem der vorherigen Ansprüche und
- einen Behälteradapter (8) zur Befestigung des Feldgeräts (1) an dem Behälter, umfassend einen zylindrischen Grundkörper (8a), an welchem folgende Komponenten angeordnet sind,
a. ein drittes Befestigungselement (5c) zur Befestigung des Behälteradapters (8) an dem Behälter,
b. ein viertes Befestigungselement (5d) zur Befestigung des Behälteradapters (8) an dem Verbindungsadapter (6) mittels des zweiten Befestigungselements (5b), und
c. eine zweite Auflage (9b) des Behälteradapters (8) zur Aufnahme des Dichtelements (7).

4. Adapteranordnung nach Anspruch 3,
wobei die erste und/oder die zweite Auflage (9a,b) in Form einer Änderung im Außendurchmesser des Verbindungsadapters (6) bzw. des Behälteradapters (8), insbesondere eines Absatzes, oder einer Auflagefläche ausgestaltet ist/sind.

5. Adapteranordnung nach Anspruch 3 oder 4,
wobei die erste und zweite Auflage (9a,b) zueinander komplementär ausgestaltet sind und derart zusammenwirken, dass das Dichtelement (7) zwischen den beiden Auflagen aufnehmbar ist, wenn der Verbindungsadapter (6) an dem Behälteradapter (8) befestigt ist.

6. Adapteranordnung nach Anspruch 5,
wobei die erste und zweite Auflage (9a,b) eine Kraft auf das Dichtelement (7) ausüben, wenn der Verbindungsadapter (6) an dem Behälteradapter (8) befestigt ist, wobei das Dichtelement (7) in Folge der durch die Auflagen vermittelten Kraft radial und/oder axial verformbar ist.

7. Adapteranordnung nach zumindest einem der Ansprüche 3-6, wobei jeweils im Bereich einer Mantelfläche des Grundkörpers des Verbindungsadapters (6) und des Grundkörpers des Behälteradapters (8) jeweils mindestens ein Loch (10a,b) angeordnet ist, wobei das Loch des Verbindungsadapters bzw. des Behälteradapters entlang einer Längsachse des Grundkörpers des Verbindungsadapters (6) und des Grundkörpers des Behälteradapters (8) jeweils derart angeordnet ist, dass die erste bzw. zweite Auflage (9a,b) zwischen dem Loch des Verbindungsadapters (10a) bzw. dem Loch des Behälteradapters (10b) und einem dem Behälter zugewandten Endabschnitt des Verbindungsadapters (6) bzw. des Behälteradapters (8) angeordnet ist/sind.

8. Adapteranordnung nach Anspruch 7,
wobei die jeweiligen Löcher des Verbindungsadapters (10a) bzw. des Behälteradapters (10b) so angeordnet sind, dass das Loch des Verbindungsadapters (10a) und das Loch des Behälteradapters (10b) zumindest teilweise überlappen, insbesondere miteinander fluchten, wenn der Verbindungsadapter (6) an dem Behälteradapter (8) befestigt ist.

9. Adapteranordnung nach zumindest einem der Ansprüche 3-8, wobei das dritte Befestigungselement (5c) des Behälteradapters (8) eine Vorrichtung zum Schweißen, Schrauben oder Klemmen umfasst.

10. Adapteranordnung nach Anspruch 9,
wobei der Behälteradapter (8) in einem Endbereich des Behälteradapters, welcher dem Behälter abgewandt ist, eine größere Wandstärke (11) als der Grundkörper des Behälteradapters in einem mittleren Bereich aufweist, wenn das dritte Befestigungselement (5c) des Behälteradapters eine Vorrichtung zum Schweißen umfasst.

11. Messanordnung zum Einbringen eines Feldgeräts (1) in einen Behälter, umfassend
- eine Befestigungsanordnung nach zumindest einem der Ansprüche 1-2,
- einen Behälteradapter (8) nach zumindest einem der Ansprüche 3-10, und
- ein Feldgerät (1), umfassend eine Elektronik (3) und einen Sensor (2), wobei der Sensor (2) und die Elektronik (3) des Feldgeräts (1) zumindest teilweise von zumindest einem Gehäuse (4) umgeben sind, und wobei das Gehäuse (4) des Feldgeräts ein fünftes Befestigungselement (5e) zur Befestigung des Feldgeräts (1) an dem Verbindungsadapter (6) mittels des ersten Befestigungselements (5a) aufweist.

12. Messanordnung nach Anspruch 11,
wobei mindestens ein erster Bereich des Feldgeräts (1), welcher zumindest teilweise in den Verbindungsadapter (6) hineinragt, wenn das Feldgerät (1) an dem Verbindungsadapter (6) befestigt ist, und mindestens ein zweiter Bereich des Feldgeräts (1), der zumindest teilweise in den Behälteradapter (8) und in den Behälter hineinragt, wenn das Feldgerät (1) an dem Behälteradapter (8) mittels des Verbindungsadapters (6) befestigt ist, denselben Außendurchmesser aufweisen, wobei insbesondere das fünfte Befestigungselement (5e), wenn es in dem ersten oder zweiten Bereich des Feldgeräts angeordnet ist, keine Änderung des Außendurchmessers des ersten und zweiten Bereichs des Feldgeräts bewirkt.

13. Messanordnung nach zumindest einem der Ansprüche 11-12,
wobei mindestens eins der Befestigungselemente (5a-e) ein Gewinde umfasst.

14. Messanordnung nach Anspruch 13,
wobei das erste und fünfte (5a,e) bzw. das zweite und vierte (5b,d) Gewinde zueinander komplementär ausgestaltet sind, insbesondere wobei jeweils ein Innengewinde und ein komplementär ausgestaltetes Außengewinde zusammenwirken.

15. Messanordnung nach zumindest einem der Ansprüche 11-14, wobei es sich bei dem Feldgerät (1) um ein nach dem kapazitiven und/oder konduktiven Messprinzip arbeitendes Feldgerät handelt, wobei eine Prozessgröße insbesondere der Füllstand, die Leitfähigkeit oder die Dielektrizitätskonstante ist.

## Claims

1. A mounting arrangement for introducing a field device (1) into a container, wherein the field device (1) comprises a housing (4) and a sensor (2), wherein the sensor (2) of the field device projects at least partially into the container, and wherein the field device (1) serves to determine and/or monitor a physical or chemical process variable of a medium in the container, comprising
a connection adapter (6) comprising a cylindrical base body (6a) on which the following components are arranged:
a. a first fastening element (5a) for fastening the connection adapter (6) to the field device (1), wherein the connection adapter (6) can be fastened to the field device (1) in such a way that the connection adapter (6) at least partially surrounds the field device (1) when it is fastened to the field device (1),
b. a second fastening element (5b) for fastening the connection adapter (6) to a container adapter (8), wherein the connection adapter (6) can be fastened to the container adapter (8) in such a way that the container adapter (8) at least partially surrounds the connection adapter (6) when it is fastened to the connection adapter (6),
c. a first seat (9a) of the connecting adapter (6) for receiving a sealing element (7) on an end surface of the base body (6), and
a sealing element (7), wherein the sealing element is configured such that it can be received on the seat (9a) of the connection adapter (6) and wherein the sealing element (7) is arranged in contact with the medium when the field device (1) is introduced into the container.

2. A mounting arrangement according to claim 1,
wherein the sealing element (7) is an O-ring or a molded seal.

3. An adapter assembly for introducing a field device (1) into a container, comprising
- a mounting assembly according to at least one of the previous claims and
- a container adapter (8) for mounting the field device (1) on the container, comprising a cylindrical base body (8a) on which the following components are arranged:
a. a third fastening element (5c) for fastening the container adapter (8) to the container,
b. a fourth fastening element (5d) for fastening the container adapter (8) to the connection adapter (6) by means of the second fastening element (5b), and
c. a second seat (9b) of the container adapter (8) for receiving the sealing element (7).

4. Adapter arrangement according to claim 3,
wherein the first and/or the second seat (9a,b) is/are configured in the form of a change in the external diameter of the connecting adapter (6) or of the container adapter (8), in particular a shoulder, or a bearing surface.

5. Adapter arrangement according to claim 3 or 4,
wherein the first and second bearing surfaces (9a,b) are designed to be complementary to one another and interact in such a way that the sealing element (7) can be accommodated between the two bearing surfaces when the connecting adapter (6) is attached to the container adapter (8).

6. Adapter arrangement according to claim 5,
wherein the first and second supports (9a,b) exert a force on the sealing element (7) when the connection adapter (6) is attached to the container adapter (8), wherein the sealing element (7) is radially and/or axially deformable as a result of the force transmitted by the supports.

7. Adapter arrangement according to at least one of claims 3-6,
wherein at least one hole (10a,b) is arranged in each case in the region of a lateral surface of the base body of the connection adapter (6) and of the base body of the container adapter (8), wherein the hole of the connection adapter or of the container adapter is arranged along a longitudinal axis of the base body of the connection adapter (6) and of the base body of the container adapter (8) is arranged in each case such that the first and second bearing surfaces (9a, b) are arranged between the hole of the connecting adapter (10a) or the hole of the container adapter (10b) and an end section, facing the container, of the connecting adapter (6) or of the container adapter (8).

8. Adapter arrangement according to claim 7,
wherein the respective holes of the connecting adapter (10a) and of the container adapter (10b) are arranged such that the hole of the connecting adapter (10a) and the hole of the container adapter (10b) at least partially overlap, in particular are aligned with one another, when the connecting adapter (6) is attached to the container adapter (8).

9. Adapter arrangement according to at least one of claims 3-8,
wherein the third fastening element (5c) of the container adapter (8) comprises a device for welding, screwing or clamping.

10. An adapter arrangement according to claim 9,
wherein the container adapter (8) has a greater wall thickness (11) in an end region of the container adapter, which is remote from the container, than the base body of the container adapter in a central region, when the third fastening element (5c) of the container adapter comprises a device for welding.

11. A measuring arrangement for introducing a field device (1) into a container, comprising
- a fastening arrangement according to at least one of Claims 1-2,
- a container adapter (8) according to at least one of claims 3-10, and
- a field device (1) comprising electronics (3) and a sensor (2), the sensor (2) and the electronics (3) of the field device (1) being at least partially surrounded by at least one housing (4), and wherein the housing (4) of the field device has a fifth fastening element (5e) for fastening the field device (1) to the connection adapter (6) by means of the first fastening element (5a).

12. Measuring arrangement according to claim 11,
wherein at least a first region of the field device (1), which at least partially projects into the connection adapter (6) when the field device (1) is attached to the connection adapter (6), and at least a second region of the field device (1), which at least partially projects into the container adapter (8) and into the container when the field device (1) is attached to the container adapter (8) by means of the connection adapter (6) have the same external diameter, in particular the fifth fastening element (5e), when it is arranged in the first or second region of the field device, not causing any change in the external diameter of the first and second region of the field device.

13. Measurement arrangement according to at least one of claims 11-12,
wherein at least one of the fastening elements (5a-e) comprises a thread.

14. Measurement arrangement according to claim 13,
wherein the first and fifth (5a,e) and the second and fourth (5b,d) threads are designed to be complementary to one another, in particular wherein in each case an internal thread and a complementarily designed external thread interact.

15. Measuring arrangement according to at least one of claims 11-14,
wherein the field device (1) is a field device operating according to the capacitive and/or conductive measuring principle, wherein a process variable is in particular the filling level, the conductivity or the dielectric constant.

## Revendications

1. Dispositif de fixation pour l'introduction d'un appareil de terrain (1) dans un récipient, l'appareil de terrain (1) comprenant un boîtier (4) et un capteur (2), le capteur (2) de l'appareil de terrain pénétrant au moins partiellement dans le récipient, et l'appareil de terrain (1) servant à déterminer et/ou à surveiller une grandeur de processus physique ou chimique d'un milieu dans le récipient, comprenant
- un adaptateur de liaison (6), comprenant un corps de base cylindrique (6a), sur lequel sont disposés les composants suivants,
a. un premier élément de fixation (5a) pour fixer l'adaptateur de connexion (6) à l'appareil de terrain (1), l'adaptateur de connexion (6) pouvant être fixé à l'appareil de terrain (1) de telle sorte que l'adaptateur de connexion (6) entoure au moins partiellement l'appareil de terrain (1) lorsqu'il est fixé à l'appareil de terrain (1),
b. un deuxième élément de fixation (5b) pour fixer l'adaptateur de connexion (6) à un adaptateur de récipient (8), l'adaptateur de connexion (6) pouvant être fixé à l'adaptateur de récipient (8) de telle sorte que l'adaptateur de récipient (8) entoure au moins partiellement l'adaptateur de connexion (6) lorsqu'il est fixé à l'adaptateur de connexion (6),
c. un premier support (9a) de l'adaptateur de connexion (6) pour recevoir un élément d'étanchéité (7) sur une surface d'extrémité du corps de base (6), et
- un élément d'étanchéité (7), l'élément d'étanchéité étant configuré pour être reçu sur le support (9a) de l'adaptateur de connexion (6) et l'élément d'étanchéité (7) étant disposé en contact avec le fluide lorsque l'appareil de terrain (1) est placé dans le récipient.

2. Ensemble de fixation selon la revendication 1,
dans lequel l'élément d'étanchéité (7) est un joint torique ou un joint moulé.

3. Un agencement d'adaptateur pour placer un appareil de terrain (1) dans un récipient, comprenant
- un ensemble de fixation selon au moins l'une des revendications précédentes, et
- un adaptateur de récipient (8) pour la fixation de l'appareil de terrain (1) sur le récipient, comprenant un corps de base cylindrique (8a) sur lequel sont disposés les composants suivants,
a. un troisième élément de fixation (5c) pour la fixation de l'adaptateur de récipient (8) sur le récipient,
b. un quatrième élément de fixation (5d) pour fixer l'adaptateur de récipient (8) à l'adaptateur de liaison (6) au moyen du deuxième élément de fixation (5b), et
c. un deuxième support (9b) de l'adaptateur de récipient (8) pour recevoir l'élément d'étanchéité (7).

4. Ensemble adaptateur selon la revendication 3,
dans lequel le premier et/ou le deuxième support (9a, b) est/sont conçu(s) sous la forme d'une modification du diamètre extérieur de l'adaptateur de liaison (6) ou de l'adaptateur de récipient (8), en particulier d'un épaulement, ou d'une surface d'appui.

5. Ensemble adaptateur selon la revendication 3 ou 4,
dans lequel les premier et deuxième appuis (9a, b) sont complémentaires l'un de l'autre et coopèrent de telle sorte que l'élément d'étanchéité (7) peut être logé entre les deux appuis lorsque l'adaptateur de connexion (6) est fixé à l'adaptateur de récipient (8).

6. Ensemble adaptateur selon la revendication 5,
dans lequel les premier et deuxième supports (9a, b) exercent une force sur l'élément d'étanchéité (7) lorsque l'adaptateur de connexion (6) est fixé à l'adaptateur de récipient (8), l'élément d'étanchéité (7) étant déformable radialement et/ou axialement en raison de la force transmise par les supports.

7. Ensemble adaptateur selon au moins l'une des revendications 3 à 6,
au moins un trou (10a, b) étant respectivement disposé dans la zone d'une surface d'enveloppe du corps de base de l'adaptateur de liaison (6) et du corps de base de l'adaptateur de récipient (8), le trou de l'adaptateur de liaison ou de l'adaptateur de récipient étant respectivement disposé le long d'un axe longitudinal du corps de base de l'adaptateur de liaison (6) et du corps de base de l'adaptateur de récipient (8) de telle sorte que le premier ou le second trou (10a, b) est disposé dans la zone de la surface d'enveloppe de l'adaptateur de liaison (6). deuxième support (9a, b) est/sont disposé(s) entre le trou de l'adaptateur de connexion (10a) ou le trou de l'adaptateur de récipient (10b) et une partie d'extrémité de l'adaptateur de connexion (6) ou de l'adaptateur de récipient (8) orientée vers le récipient.

8. Ensemble adaptateur selon la revendication 7,
dans lequel les trous respectifs de l'adaptateur de connexion (10a) et de l'adaptateur de récipient (10b), respectivement, sont agencés de telle sorte que le trou de l'adaptateur de connexion (10a) et le trou de l'adaptateur de récipient (10b) se chevauchent au moins partiellement, en particulier sont alignés l'un avec l'autre, lorsque l'adaptateur de connexion (6) est fixé à l'adaptateur de récipient (8).

9. Ensemble adaptateur selon au moins l'une des revendications 3 à 8,
dans lequel le troisième élément de fixation (5c) de l'adaptateur de récipient (8) comprend un dispositif de soudage, de vissage ou de serrage.

10. Ensemble adaptateur selon la revendication 9,
dans lequel l'adaptateur de récipient (8) présente, dans une zone d'extrémité de l'adaptateur de récipient qui est opposée au récipient, une épaisseur de paroi (11) supérieure à celle du corps de base de l'adaptateur de récipient dans une zone centrale, lorsque le troisième élément de fixation (5c) de l'adaptateur de récipient comprend un dispositif pour le soudage.

11. Dispositif de mesure pour l'insertion d'un appareil de terrain (1) dans un récipient, comprenant
- un ensemble de fixation selon au moins l'une des revendications 1-2,
- un adaptateur de récipient (8) selon au moins l'une des revendications 3 à 10, et
- un appareil de terrain (1) comprenant une électronique (3) et un capteur (2), le capteur (2) et l'électronique (3) de l'appareil de terrain (1) étant au moins partiellement entourés par au moins un boîtier (4), et le boîtier (4) de l'appareil de terrain comportant un cinquième élément de fixation (5e) pour fixer l'appareil de terrain (1) à l'adaptateur de connexion (6) au moyen du premier élément de fixation (5a).

12. Dispositif de mesure selon la revendication 11,
dans lequel au moins une première zone de l'appareil de terrain (1) qui fait saillie au moins partiellement dans l'adaptateur de connexion (6) lorsque l'appareil de terrain (1) est fixé à l'adaptateur de connexion (6), et au moins une deuxième zone de l'appareil de terrain (1) qui fait saillie au moins partiellement dans l'adaptateur de récipient (8) et dans le récipient, lorsque l'appareil de terrain (1) est fixé à l'adaptateur de récipient (8) au moyen de l'adaptateur de connexion (6), ont le même diamètre extérieur, dans lequel, en particulier, le cinquième élément de fixation (5e), lorsqu'il est placé dans la première ou la deuxième zone de l'appareil de terrain, ne provoque pas de modification du diamètre extérieur de la première et de la deuxième zone de l'appareil de terrain.

13. Dispositif de mesure selon au moins l'une des revendications 11 à 12,
dans lequel au moins un des éléments de fixation (5a-e) comprend un filetage.

14. Dispositif de mesure selon la revendication 13,
dans lequel le premier et le cinquième (5a, e) ou le deuxième et le quatrième (5b, d) filetage sont configurés de manière complémentaire l'un par rapport à l'autre, en particulier dans lequel un filetage intérieur et un filetage extérieur configuré de manière complémentaire coopèrent respectivement.

15. Dispositif de mesure selon au moins l'une des revendications 11 à 14,
l'appareil de terrain (1) étant un appareil de terrain fonctionnant selon le principe de mesure capacitif et/ou conductif, une grandeur de processus étant notamment le niveau de remplissage, la conductivité ou la constante diélectrique.
